# EUROPEAN PATENT SPECIFICATION

(11) **EP 4 005 730 B1**
(45) Date of publication and mention of the grant of the patent: **08.10.2025**
(21) Application number: 21209755.4
(22) Date of filing: 23.11.2021
(51) Int. Cl.: B23Q 11/10, B27C 3/04

(54) **MACHINE TOOL WITH AN AUTOMATIC LUBRICATING SYSTEM AND RELATED LUBRICATING METHOD**
WERKZEUGMASCHINE MIT EINEM AUTOMATISCHEN SCHMIERSYSTEM UND ZUGEHÖRIGES SCHMIERVERFAHREN
MACHINE-OUTIL DOTÉE D'UN SYSTÈME DE LUBRIFICATION AUTOMATIQUE ET PROCÉDÉ DE LUBRIFICATION ASSOCIÉ

(30) Priority: 25.11.2020 IT 202000028340
(43) Date of publication of application: 01.06.2022
(73) Proprietor: SCM Group S.p.A., 47921 Rimini (RN) (IT)
(72) Inventor: FERRI, Mirko, 47921 RIMINI (IT); CECCARELLI, Paolo, 47921 RIMINI (IT); BERTUCCIOLI, Alessandro, 47921 RIMINI (IT)
(74) Representative: Tiburzi, Andrea

(56) References cited:
- DE-A1- 19 607 176
- ES-A1- 2 334 751
- US-A1- 2004 191 012
- US-A1- 2006 159 529
- US-A1- 2020 114 482
- US-A1- 2020 230 767

## Description

The present invention relates to a machine tool with an automatic lubricating system and related lubricating method, according to the preamble of claims 1 and 12. Such a machine and such a method are known from the document US 2006/159529 A1.

### Field of the invention

More in detail, the invention relates to a machine tool for machining wood panels and the like, such as wood fiber, plastic, or fiberglass panels, comprising parts to be periodically lubricated, in particular spindles, and an automatic lubrication system, to lubricate these spindles.

The present invention also relates to a method of automatic lubrication of such spindles.

In the following, the description will be directed to a machine tool for working wooden panels and the like comprising spindles to be periodically lubricated. However, it is clear that the same description should not be considered limited to this specific use, but it can be applied to any machine tool comprising parts to be lubricated.

### Prior art

As is well known, machine tools for working wooden panels and the like usually comprise: a working surface, on which to arrange a panel to be machined; at least one operating head, capable to moving relative to the working surface, comprising at least one spindle; and at least one tool or machining member, for example, a plurality of drilling bits, which can be coupled to said at least one spindle of the operating head, for machining the panel to be machined arranged on the working surface.

The moving parts of these machines, and in particular the spindles, require to be periodically lubricated to ensure the correct operation of the machine tool itself. This lubrication is usually done manually by an operator, after stopping the machine.

This involves frequent and long periods of machine downtime, especially in the case of a machine tool comprising a plurality of spindles, with consequent high maintenance costs.

Furthermore, such manual lubrication can easily be subject to human error. By way of example, the operator could not treat a spindle to be lubricated, especially in the case in which the mobile assembly includes a large number of spindles, or he could lubricate these spindles with an incorrect quantity of lubricant.

An alternative solution to the manual lubrication, described above, provides for the realization of an operating head equipped with an automatic lubrication system, which comprises a plurality of stable connections between a lubricant reservoir and the different spindles of the operating head.

This alternative, while overcoming the limits of the manual solution, involves the creation on the operating head of a complicated system of lubrication ducts and electrical cables, considerably increasing the construction costs of the machine and limiting the movements that the operating head can perform during the processing.

### Scope of the invention

In light of the above, it is therefore an object of the present invention to provide a machine tool that overcomes the problems of the prior art.

In particular, the object of the present invention is to provide a machine tool for the machining of panels and the like, which allows the automatic lubrication of the spindles or of the rotary members assigned to receive the tools for the execution of the foreseen processes, while avoiding the need to make changes to the machine that limits its operation and increase its cost.

Furthermore, the object of the present invention is that this machine tool allows minimizing the lubrication times of the spindles.

Another object of the invention proposed here is that the operating members of this machine tool are scarcely subject to breakage.

A further object of the present invention is that this machine tool is simple to use, safe and reliable.

Furthermore, the object of the present invention is that this machine tool is of reduced dimensions.

Still another object of the present invention is that this machine tool minimizes maintenance costs.

Finally, the object of the present invention is to provide an automatic method for the spindles lubrication that is quick, safe and reliable, if compared to the prior art.

### Object of the invention

It, therefore, a specific object of the present invention, a machine tool, in particular for machining elements to be machined such as wooden panels and similar, comprising: a working surface, for receiving an element to be machined; at least one operative head, movable relative to said element to be machined, and comprising
at least one spindle, able to be coupled, in use, to a respective machining member, for machining said element to be machined, and
at least one lubricating conduit in fluid connection with at least one opening, for introducing a lubricant, and with said at least one spindle.

Said machine tool comprises, also, a lubricant dispenser, able to be coupled to said at least one opening, said lubricant dispenser being configured for dispensing, when activated, said lubricant.

Finally said machine comprises also a control unit, for controlling the movement of said operative head and/or of said lubricant dispenser.

Said control unit is configured to command at least one mutual movement between said operative head and said lubricant dispenser, to couple said lubricant dispenser to said at least one opening, and to activate said lubricant dispenser such that said lubricant dispenser supplies said lubricant into said at least one lubricating conduit through said at least one opening, to lubricate said at least one spindle. In particular, this such dispensing can take place after the coupling between the lubricant dispenser and said at least one opening.

In addition according to the invention, such lubricant dispenser may be configured to be activated by means of an electric command, and/or a pneumatic command, and/or by exercising a pressure.

In particular, according to the invention, said lubricant dispenser is configured for being activated by exercising a pressure, and in that said control unit is configured to command said at least one mutual movement between said operative head and said lubricant dispenser such that said operative head exercises said pressure on the lubricant dispenser.

Further according to the invention, said lubricant dispenser may comprise a tank for containing said lubricant and a dispensing pump in fluid connection with said tank. Said dispensing pump may be configured for dispensing said lubricant from said tank when subjected to said pressure.

Still according to the invention, said operative head may be movable along at least one axis, preferably a vertical axis. In this case, said lubricant dispenser may be placed on said axis, and said control unit may be configured for moving said operative head at least along said axis.

Always according to the invention, said lubricant dispenser may be removable with respect to said machine tool.

Further according to the invention, said lubricant dispenser may be connectable with said working surface.

In addition, said lubricant dispenser may be movable between a resting configuration, where said lubricant dispenser is completely placed below said working surface, and an operative configuration, where said lubricant dispenser protrudes at least partially above said working surface.

According to the invention, said machine tool may comprise at least one pair of supporting elements, defining said working surface and placed apart from each other. In this case, said lubricant dispenser may be placed between said supporting elements.

Still according to the invention, said operative head may comprise a plurality of spindles.

In this case, a lubricating conduit may be provided, which is associated with each spindle, and a plurality of openings, preferably a respective opening for each lubricating conduit, may be provided.

Finally, according to the invention, said lubricant dispenser may be able to be simultaneously coupled to a plurality of said openings, in particular to all said openings.

It is a further object of the present invention, a method to automatically lubricate a spindle of a machine tool according to any one of the previous claims, comprising the following steps which are executable by said control unit:
A. moving said operative head and/or said lubricant dispenser such as to couple said lubricant dispenser with said at least one opening; and
B. activating said lubricant dispenser to automatically supply said lubricant into said at least one lubricating conduit through said at least one opening and consequently lubricate said at least one spindle.

In particular, according to the invention, said step B may be executed by means of an electric command, and/or a pneumatic command, and/or by exercising a pressure.

Further, according to the invention, said operative head comprises a plurality of spindles, a plurality of lubricating conduits in fluid communication with said plurality of spindles, and a plurality of openings in which said plurality of lubricating conduits ends.

In this case, said steps A. and B. are repeated for each opening of said plurality of openings.

As an alternative, according to the invention, said step A may comprise simultaneously coupling said lubricant dispenser with a plurality of said openings, in particular with all said openings.

### Brief description of the figures

The present invention will be now described, for illustrative but not limitative purposes, according to its preferred embodiments, with particular reference to the figures of the enclosed drawings, wherein:
figure 1 shows a first lateral axonometric view of a machine tool according to the present invention comprising four operating heads and an automatic lubrication system comprising a lubricant dispenser, for lubricating the spindles of these operating heads;
figure 2 shows a front view of the machine tool of figure 1;
figure 3 shows a second axonometric view from above of the machine tool of figure 1;
figure 4 shows an axonometric view from below of a first embodiment of an operating head of a machine tool according to the present invention, comprising a plurality of spindles, respective openings of lubrication ducts associated with the spindles, in which to insert lubricant, and drilling bits coupled to the spindles;
figure 5 shows a side view of a detail of a machine tool according to the present invention during a working phase, in which a machined panel arranged on a working plane defined by two respective supporting elements is shown, a lubricant dispenser in a rest configuration, and an operating head comprising spindles, respective openings of lubrication ducts associated with the spindles and drilling bits coupled to the spindles;
figure 6 shows a side view of the detail of the machine tool of figure 5 during a first lubrication phase, in which the lubricant dispenser is in an operative configuration;
figure 7A shows a side view of the detail of the machine tool of figure 5, during a second lubrication step, in which the lubricant dispenser occupies an opening of a lubrication duct of a respective spindle;
figure 7B shows a side perspective view of a detail of figure 7A;
figure 8A shows a side view of the detail of the machine tool of figure 5, during a third lubrication phase, in which the lubricant dispenser delivers lubricant inside the opening of the lubrication duct;
figure 8B shows a perspective view, from below, of a detail of figure 8A; and
figure 9 shows a side view of the detail of the machine tool of figure 5, during a fourth lubrication phase, in which the lubricant dispenser has finished dispensing lubricant inside the opening of the lubrication duct.

### Detailed description

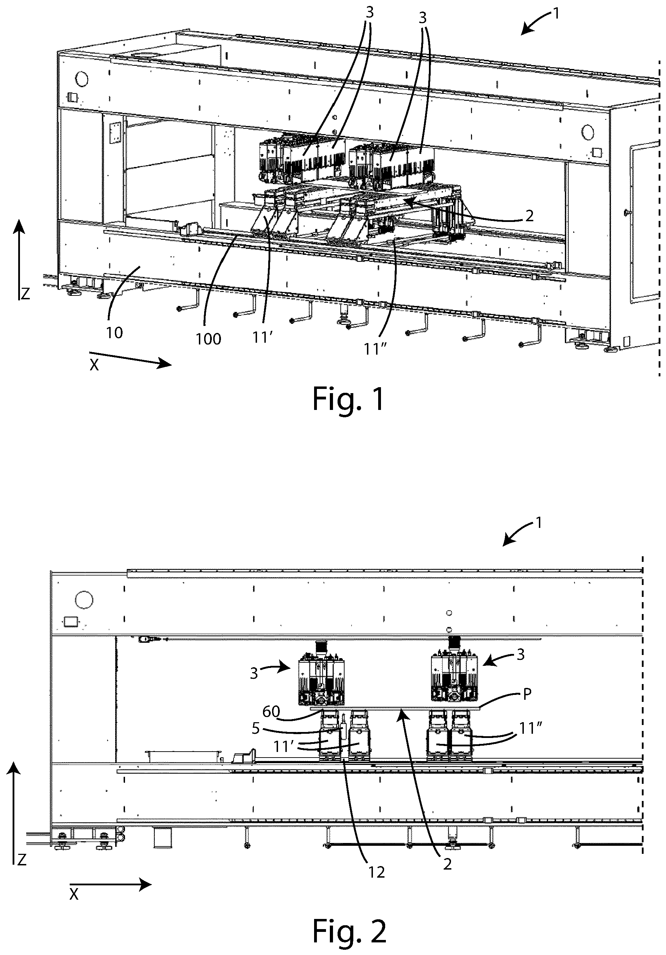

With reference to figures 1 - 9, a machine tool 1 can be seen, in particular a drilling machine 1, for machining wooden panels P and the like according to the present invention, comprising
a working surface 2 on which a panel P is arranged,
four operating heads 3, movable relative to the panel P for its machining, and
a control unit (not shown), connected to said operating heads 3, to control their movement relative to the working surface 2.

In particular, in the embodiment shown, the operating heads 3 are movable relative to the working surface.

The machine tool 1 in fact comprises
a frame comprising a pair of parallel longitudinal members 10, which extend in length along a horizontal X-axis, and which are equipped with respective tracks 100;
four supporting elements 11', 11" slidingly coupled with said tracks 100, in which the top surfaces of said supporting elements 11', 11" jointly define the aforementioned working surface 2; and
a lubricant dispenser 5 connected to a support element 11', the function of which will be better illustrated below.

In the embodiment shown there is in fact a first pair of supporting elements 11', and a second pair of supporting elements 11", spaced from said first pair, in which the supporting elements 11' of said first pair are separated one from the other to form a housing 12 between them to house the lubricant dispenser 5.

The supporting elements 11', 11" also comprise respective supporting surfaces 110, or shelves 110, coplanar with each other, which they define the working surface 2.

In other words, the panel P, during use, rests on the four support surfaces 110 of the supporting elements 11', 11".

Since, as mentioned, these supporting elements 11', 11" can be moved along the tracks 100, the extension of the working surface 2 can be advantageously adjusted based on the different types of panels P to be machined.

However, in alternative embodiments (not shown), the working surface 2 can be formed by elements other than those described, and can also be fixed. By way of example, only a pair of supporting elements 11' can be present, in particular a pair of fixed supporting elements 11'. Furthermore, the machine tool 1 may not comprise said tracks 100.

As mentioned, four operating heads 3 are shown in figures 1-4. However, in one embodiment (not shown), the number of operating heads 3 of the machine tool 1 can be different from four, as there may also be only one operating head 3.

Finally, the control unit can be of the programmable type and can comprise or be connected to storage means for memorizing the position of the various elements connected to it.

The same control unit can also be configured to control the displacements of the supporting elements 11', 11" along the tracks 100.

The lubricant dispenser 5 shown in figures 1-9 comprises a tank 50 containing lubricant, for example grease, and a dispensing pump 51 in fluid connection with the tank 50. The dispensing pump 51 is configured to deliver lubricant from the tank 50 when operated, particularly when subjected to pressure. Said pressure can be exerted by the operating head, but it is possible to provide that this pressure is exerted by a special device not integral with the operating head.

Other embodiments (not shown) provide for forms of actuation other than the exertion of a pressure by the operating head, such as for example an electric control and/or a pneumatic control. The term "command" can mean both a sensor element, for example a proximity and/or contact sensor, and an actuator element, for example an electric and/or pneumatic actuator.

The dispensing pump 51 can be equipped with a suitable valve, in particular a spherical valve, to prevent the undesired leakage of lubricant.

In the particular embodiment shown, the lubricant dispenser 5 has a substantially vertical development. Specifically, the dispensing pump 51 is a stem arranged along a vertical Z-axis, orthogonal to the horizontal X-axis, for the reasons illustrated below.

As said, the lubricant dispenser 5 is arranged inside the housing 12 between the supporting elements 11' and coupled to one of them, thus forming a lubrication station or greasing station for the spindles of the operating heads 3.

According to the invention, spindle lubrication means the lubrication of the parts of the spindles most subject to wear, such as bearings and/or gears for motion transmission.

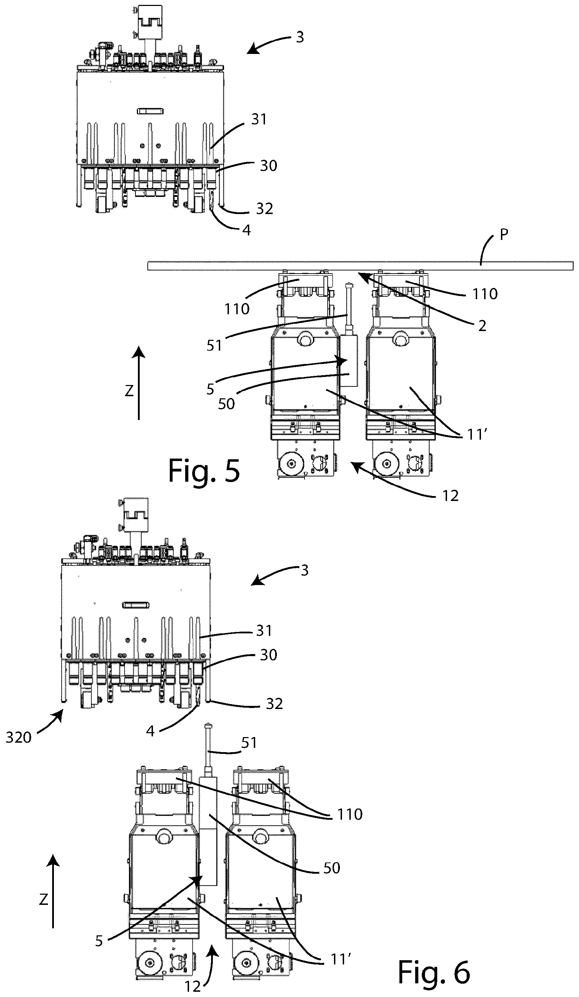

Furthermore, with particular reference to figures 5-9, the lubricant dispenser 5 is configured to move along the vertical Z-axis, between a rest configuration, in which it is arranged below the working surface 2 (see figure 5), and an operating configuration (see figure 6), in which at least the dispensing pump 51 protrudes above the working surface 2, for the reasons illustrated below.

The movement of the lubricant dispenser 5 can also take place under the control of said control unit.

In other words, in the embodiment shown, the lubricant dispenser 5 is associated with the working surface 2.

Advantageously, this arrangement of the lubricant dispenser 5, and in particular the fact that it is associated with the working surface 2, allows minimizing the overall dimensions of the machine tool 1 for the reasons illustrated below.

In alternative embodiments (not shown), the lubricant dispenser 5 can be coupled to different elements of the machine tool 1, for example to a longitudinal member 10 or another part of the frame, or to a further mobile element of the machine tool 1.

Alternatively, the lubricant dispenser 5 can be arranged in a lubrication area separated from the working surface 2.

Furthermore, the coupling between the lubricant dispenser 5 and the machine tool 1 can be of the removable type, to facilitate the refilling the tank 50.

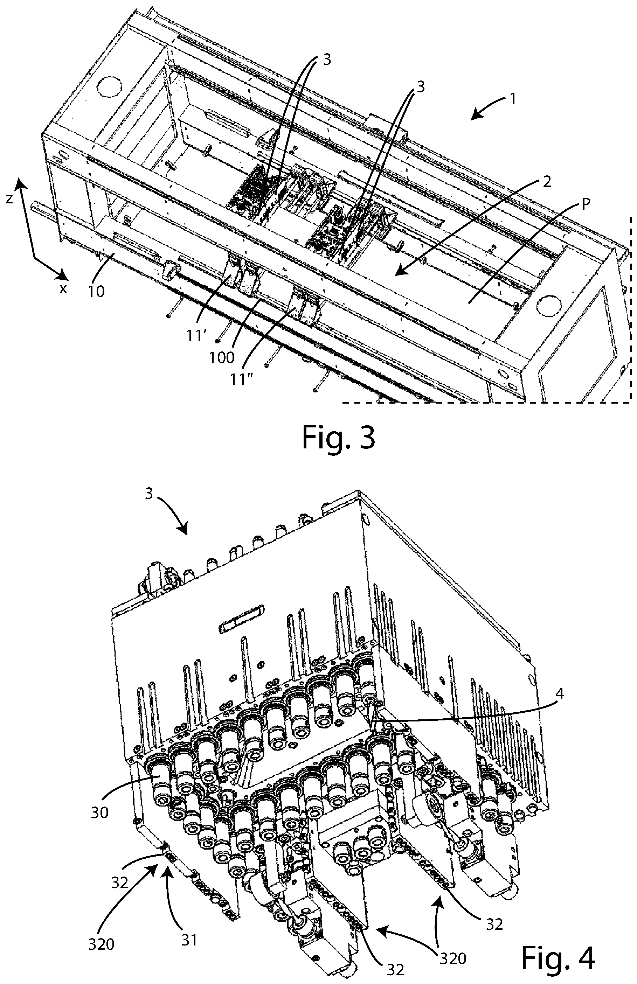

With particular reference to figure 4, an operating head 3 of a machine tool 1 according to the present invention comprises a plurality of spindles 30, on which drilling bits 4 can be removably mounted for drilling the panel P arranged on the underlying working surface 2.

According to further embodiments (not shown), other working parts for panels P, in addition to the aforementioned drilling bits 4, may be mounted on the spindles 30; moreover, the number of spindles 30 can vary, since, in hypothesis, even only one spindle 30 may be present.

The operating head 3 is configured in such a way as to be able to move, under the action of said control unit, at least along the vertical Z-axis to go down towards the panel P and perform the drilling operations on it provided by the working program in execution. In particular, the operating head 3 can move according to the vertical Z-axis and the horizontal X-axis, to allow the machining of different types of panels P.

The operating head 3 also comprises a plurality of lubrication ducts 31 in fluid connection with the outside through a respective opening 32, for the insertion of lubricant, and with a respective spindle 30, so as to allow the lubrication of the spindle 30 by inserting lubricant through the opening 32.

In particular, figure 4 shows an operating head 3 comprising a lubrication duct 31 and a respective opening 32 for each spindle 30.

These openings 32 are arranged close to each other, being concentrated on suitable portions 320 of the operating head 3. This allows limiting the movements of the operating head 3 during the automatic lubrication of the spindles 30, which will be illustrated below, and, consequently, to reduce the times' machine downtime for the execution of this automatic lubrication.

Furthermore, the portions 320 in which the openings 32 are formed are projecting with respect to the spindles 30, to facilitate this automatic lubrication step.

According to further embodiments (not shown), the number of openings 32 and/or of lubrication ducts 31 can be different from the number of the spindles 30, for example, an opening 32 can be provided, into which more lubrication ducts 31 open in their turn in fluid connection with the relative spindles 30.

The opening 32 can be coupled to the dispensing pump 51 of the lubricant dispenser 5, by means of the method illustrated below.

A further embodiment (not shown) comprises a lubricant dispenser 5, which can be coupled simultaneously to a plurality of said openings 32. In this case, the lubricant dispenser 5 comprises a plurality of dispensing pumps 51 in fluid connection with a single tank 50, or with a plurality of respective tanks 50.

Each opening 32 can also be provided with a suitable valve to prevent dripping of the lubricant onto the working surface 2 and/or onto the panel P to be machined.

With particular reference to figures 5-9, an operating mode of the machine tool 1 just described is now illustrated, in which the lubrication of the spindles 30 is carried out in an automated way.

In a working phase of the machine tool 1 shown in figure 5, the operating head 3 is moving away from the underlying panel P arranged on the working surface 2, after having performed the drilling operations on the latter by means of the drilling bits 4, while the lubricant dispenser 5 is in the respective rest configuration inside the housing 12, i.e. between the two supporting elements 11'. By way of example, for the execution of the foreseen workings, the panel P can be moved on the working plane, during the work itself, for example along a horizontal axis orthogonal to the X-axis.

Before or after the machining of the panel P, a lubrication step, shown in figures 6-9, must be provided.

During a first lubrication step shown in figure 6, in which no panel P is present on the working surface 2, the control unit arranges the lifting of the lubricant dispenser 5 in the operating configuration, and the vertical alignment, along the vertical Z-axis, between an opening 32 of the operating head 3 and the dispensing pump 51.

Since the lubricant dispenser 5 is arranged in correspondence with the working surface 2, the advantage is obtained of limiting the displacements of the operating head 3 to carrying out the lubrication operations. This makes it possible to produce machine tools 1 of contained dimensions.

However, as mentioned, in different embodiments, the lubricant dispenser 5 may not be associated with the working surface 2, being for example arranged in a lubrication area separated from it. In this case, the operating head 3 and/or the lubricant dispenser 5 will have to perform longer strokes than in the case illustrated above, in order to carry out the lubrication operations.

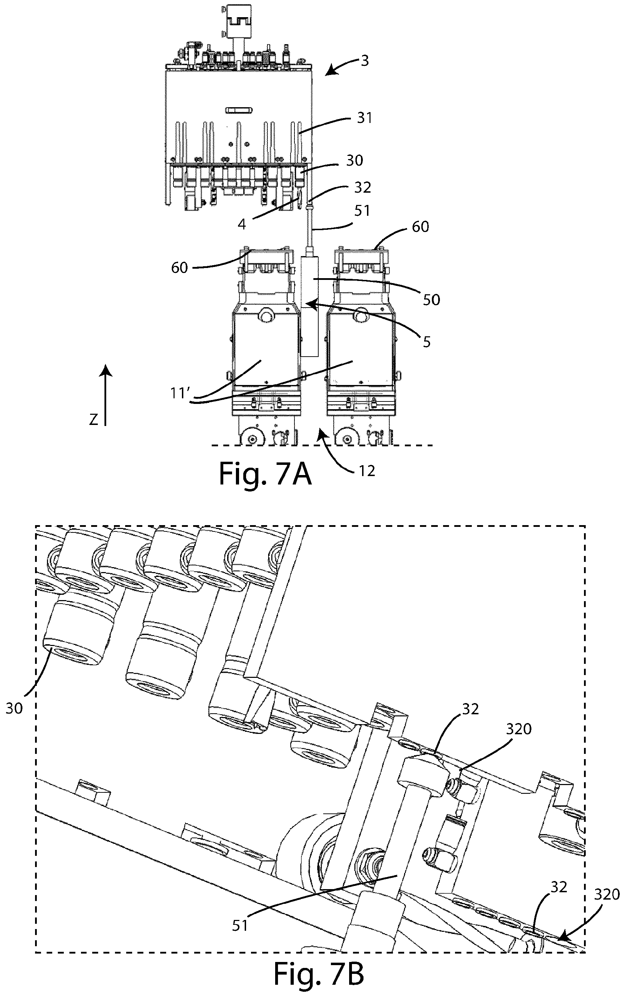

In a second lubrication step, shown in figures 7A and 7B, the control unit arranges the lowering of the operating head 3 along the vertical Z-axis until contact, i.e. coupling, is achieved between the aforementioned opening 32 and the dispensing pump 51.

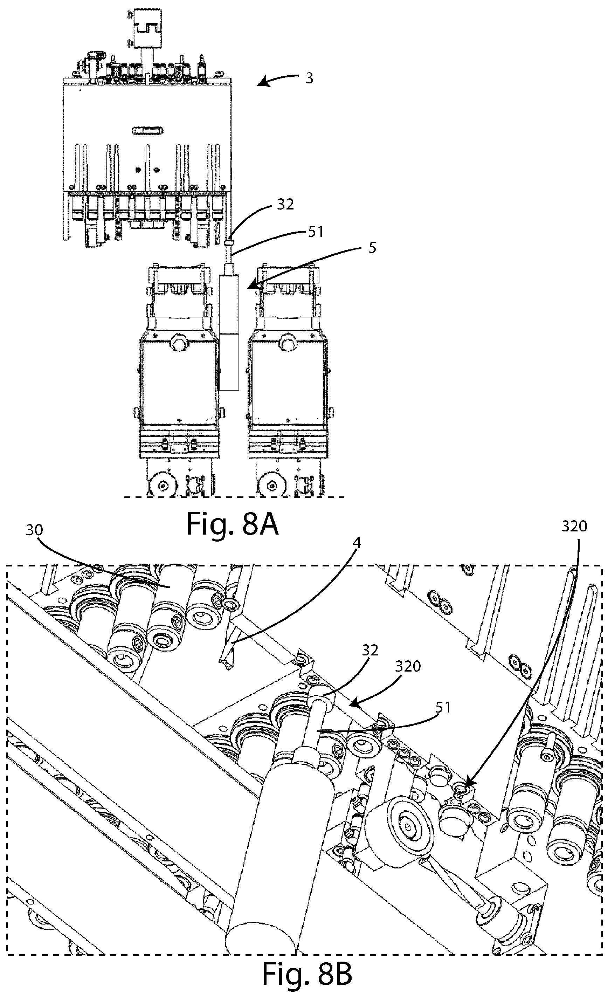

In a third lubrication step, shown in figures 8A and 8B, the control unit commands a further lowering of the operating head 3 along the vertical Z-axis, so that the operating head 3 activates the dispensing pump 51, in particular by exerting said pressure on the dispensing pump 51 and causing its stem to lower, for the delivery of the lubricant in the lubrication duct 31 connected to said opening 32 and the consequent lubrication of the respective spindle 30.

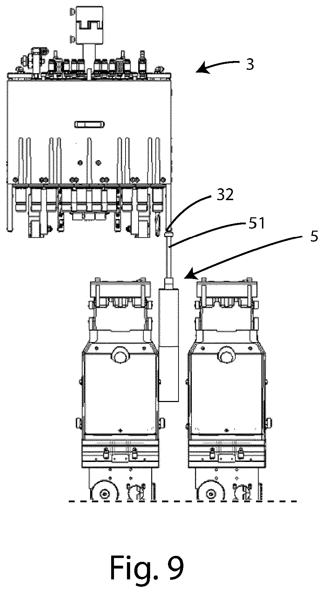

In a fourth lubrication step, shown in figure 9, the control unit arranges the lifting of the operating head 3 along the vertical Z-axis, thus interrupting the passage of the lubricant from the dispensing pump 51 to the lubrication duct 31.

The lubrication steps can therefore be repeated for each opening 32 present on the operating head 3.

In alternative embodiments (not shown), the lubrication steps can take place by keeping the operating head in one position and moving, directly or indirectly, through the control unit, only the lubricant dispenser 5, or both the lubricant dispenser 5 and the operating head 3, in such a way as to obtain in any case the reciprocal coupling between the dispensing pump 51 and an opening 32 of the operating head 3.

Furthermore, if only one opening 32 is present, the operating head 3 and/or the lubricant dispenser 5 could be configured, in principle, to move only along the vertical Z-axis, the dispensing pump 51 being arranged in the machine tool 1 to be aligned with the opening 32 along the vertical Z-axis.

In summary, an automatic lubrication method of a spindle 30, which can be actuated by a control unit of a machine tool 1 of the type described, may comprise the following steps:
A. moving the operating head 3 and/or the lubricant dispenser 5, so as to couple, for example bringing the dispensing pump 51 into mutual communication with an opening 32 of the operating head 3; and
B. operating the dispensing pump 51 for the automatic delivery of the lubricant in the lubrication duct 31 through said opening 32 and the consequent lubrication of the respective spindle 30.

In particular, during step B., the control unit operates the dispensing pump 51 by means of an electric control, and/or a pneumatic control, and/or the exertion of a pressure.

For example, during said step B., it is possible to command a reciprocal approach between the operating head 3 and the dispensing pump 51, so that said pressure is exerted on the dispensing pump 51 through the operating head 3.

Furthermore, this automatic method can comprise the following substeps of step A.:
A1. arranging the operating head 3 with said opening 32 aligned with the dispensing pump 51, with respect to the vertical Z-axis; and
A2. moving the operating head 3 with respect to the dispensing pump 51 along the vertical Z-axis, so as to make the dispensing pump 51 to couple with said opening 32.

The steps A. and B. can be repeated for each opening 32 connected to the lubrication ducts 31 of the operating head 3.

Alternatively, it is possible to provide that step A. comprises the simultaneous coupling of a plurality of dispensing pumps 51 (not shown) of a lubricant dispenser 5 to a plurality of openings 32, preferably to all openings 32 connected to the lubrication ducts 31 of the operating head. In this way, it is possible to carry out the simultaneous dispensing of the lubricant in the plurality of lubrication ducts 31 of the operating head 3 through said plurality of openings 32 and resulting in the simultaneous lubrication of said plurality of spindles 30.

In the foregoing the preferred embodiments and variants of the present invention have been described and have been suggested, but it is understood that those skilled in the art will be able to make modifications and changes without thereby departing from the relative scope of protection, as defined by the attached claims.

### Advantages

The machine tool 1 and the automatic lubrication method described make it possible to automate the lubrication of the spindles 30, advantageously reducing the machine downtime and the related maintenance costs.

Furthermore, since man-machine interactions are reduced, the machine tool 1 is advantageously safer than the machines of the known art.

Furthermore, thanks to the particular arrangement of the lubricant dispenser 5 described, the machine tool 1 does not have larger dimensions than the machines of the prior art, which provide for the manual lubrication of the spindles 30.

Furthermore, the machine tool 1 described can be advantageously adapted to different types of operating heads 3 with different arrangements of the spindles 30 and of the relative openings 32, simply by reprogramming the control unit.

## Claims

1. Machine tool (1), in particular for machining elements to be machined (P) such as wooden panels and similar, comprising:
a working surface (2), for receiving an element to be machined (P);
at least one operative head (3), movable relative to said element to be machined (P), and comprising
at least one spindle (30), able to be coupled, in use, to a respective machining member (4), for machining said element to be machined (P), wherein bearings and/or gears for motion transmission are parts of said at least one spindle (30), and
at least one lubricating conduit (31) in fluid connection with at least one opening (32), for introducing a lubricant, and with said at least one spindle (30) for a spindle lubrication;
a lubricant dispenser (5), able to be coupled to said at least one opening (32), said lubricant dispenser (5) being configured for dispensing, when activated, said lubricant; **characterized in that** the machine tool further comprises:
a control unit, for controlling the movement of said operative head (3) and/or of said lubricant dispenser (5),
wherein said control unit is configured to command at least one mutual movement between said operative head (3) and said lubricant dispenser (5), to couple said lubricant dispenser (5) to said at least one opening (32), and to activate said lubricant dispenser (5) such that said lubricant dispenser (5) supplies said lubricant into said at least one lubricating conduit (31) through said at least one opening (32), to lubricate said bearings and/or gears of said at least one spindle (30).

2. Machine tool (1) according to claim 1, **characterized in that** said lubricant dispenser (5) is configured to be activated by means of an electric command, and/or a pneumatic command, and/or by exercising a pressure.

3. Machine tool (1) according to any one of the previous claims, **characterized in that** said lubricant dispenser (5) is configured for being activated by exercising a pressure, and **in that** said control unit is configured to command said at least one mutual movement between said operative head (3) and said lubricant dispenser (5) such that said operative head (3) exercises said pressure on the lubricant dispenser (5).

4. Machine tool (1) according to any one of claims 2 or 3, **characterized in that** said lubricant dispenser (5) comprises a tank (50) for containing said lubricant and a dispensing pump (51) in fluid connection with said tank (50); said dispensing pump (51) being configured for dispensing said lubricant from said tank (50) when subjected to said pressure.

5. Machine tool (1) according to any one of the previous claims, **characterized in that**
said operative head (3) is movable along at least one axis (Z), preferably a vertical axis (Z), and **in that**
said lubricant dispenser (5) is placed on said axis (Z),
wherein said control unit is configured for moving said operative head (3) at least along said axis (Z).

6. Machine tool (1) according to any one of the previous claims, **characterized in that** said lubricant dispenser (5) is removable with respect to said machine tool (1).

7. Machine tool (1) according to any one of the previous claims, **characterized in that** said lubricant dispenser (5) is connectable with said working surface (2).

8. Machine tool (1) according to any one of the previous claims, **characterized in that** said lubricant dispenser (5) is movable between a resting configuration, where said lubricant dispenser (5) is completely placed below said working surface (2), and an operative configuration, where said lubricant dispenser (5) protrudes at least partially above said working surface (2).

9. Machine tool (1) according to any one of the previous claims, **characterized in that** it comprises at least one pair of supporting elements (11), defining said working surface (2) and placed apart from each other; wherein said lubricant dispenser (5) is placed between said supporting elements (11).

10. Machine tool (1) according to any one of the previous claims, **characterized**
**in that** said operative head (3) comprises a plurality of spindles (30),
**in that** a lubricating conduit (31) is provided, which is associated with each spindle (30), and
**in that** a plurality of openings (32), preferably a respective opening (32) for each lubricating conduit (31), is provided.

11. Machine tool (1) according to the previous claim, **characterized in that** said lubricant dispenser (5) is able to be simultaneously coupled to a plurality of said openings (32), in particular to all said openings (32).

12. Method to automatically lubricate a spindle (30) of a machine tool (1) according to any one of the previous claims, **characterized in that** it comprises: the following steps which are executable by said control unit:
A. moving said operative head (3) and/or said lubricant dispenser (5) such as to couple said lubricant dispenser (5) with said at least one opening (32) for a spindle lubrication; and
B. activating said lubricant dispenser (5) to automatically supply said lubricant into said at least one lubricating conduit (31) through said at least one opening (32) and consequently lubricate said bearings and/or gears of said at least one spindle (30).

13. Method according to the previous claim, wherein said step B. is executed by means of an electric command, and/or a pneumatic command, and/or by exercising a pressure.

14. Method according to any one of claims 12-13, wherein said operative head (3) comprises a plurality of spindles (30), a plurality of lubricating conduits (31) in fluid communication with said plurality of spindles (30), and a plurality of openings (32) in which said plurality of lubricating conduits (31) ends; and wherein said steps A. and B. are repeated for each opening of said plurality of openings (32).

15. Method according to any one of claims 12-13 wherein said operative head (3) comprises a plurality of spindles (30), a plurality of lubricating conduits (31) in fluid communication with said plurality of spindles (30), and a plurality of openings (32) in which said plurality of lubricating conduits (31) ends; and wherein said step A. comprises simultaneously coupling said lubricant dispenser (5) with a plurality of said openings (32), in particular with all said openings (32).

## Patentansprüche

1. Werkzeugmaschine (1), insbesondere für die Bearbeitung von zu bearbeitenden Elementen (P) wie Holzplatten und dergleichen, umfassend:
eine Arbeitsfläche (2) zur Aufnahme eines zu bearbeitenden Elements (P);
mindestens einen Arbeitskopf (3), der in Bezug auf das zu bearbeitende Element (P) beweglich ist und Folgendes umfasst
mindestens eine Spindel (30), die im Gebrauch mit einem entsprechenden Bearbeitungselement (4) gekoppelt werden kann, um das zu bearbeitende Element (P) zu bearbeiten, wobei Lager und/oder Zahnräder zur Bewegungsübertragung Teile der mindestens einen Spindel (30) sind, und
mindestens eine Schmierleitung (31), die in Fluidverbindung mit mindestens einer Öffnung (32) zum Einführen eines Schmiermittels und mit der mindestens einen Spindel (30) für eine Spindelschmierung steht;
einen Schmiermittelspender (5), der mit der mindestens einen Öffnung (32) gekoppelt werden kann, wobei der Schmiermittelspender (5) so konfiguriert ist, dass er, wenn er aktiviert wird, das Schmiermittel ausgibt;
**dadurch gekennzeichnet, dass** die Werkzeugmaschine ferner umfasst:
eine Steuereinheit zur Steuerung der Bewegung des Arbeitskopfes (3) und/oder des Schmiermittelspenders (5),
wobei die Steuereinheit so konfiguriert ist, dass sie mindestens eine gegenseitige Bewegung zwischen dem Arbeitskopf (3) und dem Schmiermittelspender (5) befiehlt, um den Schmiermittelspender (5) mit der mindestens einen Öffnung (32) zu koppeln und den Schmiermittelspender (5) zu aktivieren, so dass der Schmiermittelspender (5) das Schmiermittel in die mindestens eine Schmierleitung (31) durch die mindestens eine Öffnung (32) zuführt, um die Lager und/oder Zahnräder der mindestens einen Spindel (30) zu schmieren.

2. Werkzeugmaschine (1) nach Anspruch 1, **dadurch gekennzeichnet, dass** der Schmiermittelspender (5) so konfiguriert ist, dass er durch einen elektrischen Befehl und/oder einen pneumatischen Befehl und/oder durch Ausübung eines Drucks aktiviert wird.

3. Werkzeugmaschine (1) nach einem der vorhergehenden Ansprüche, **dadurch gekennzeichnet, dass** der Schmierstoffspender (5) so konfiguriert ist, dass er durch Ausüben eines Drucks aktiviert wird, und dass die Steuereinheit so konfiguriert ist, dass sie die mindestens eine gegenseitige Bewegung zwischen dem Arbeitskopf (3) und dem Schmierstoffspender (5) so steuert, dass der Arbeitskopf (3) den Druck auf den Schmierstoffspender (5) ausübt.

4. Werkzeugmaschine (1) nach einem der Ansprüche 2 oder 3, **dadurch gekennzeichnet, dass** der Schmiermittelspender (5) einen Tank (50) zur Aufnahme des Schmiermittels und eine mit dem Tank (50) in Fluidverbindung stehende Spenderpumpe (51) umfasst;
wobei die Spenderpumpe (51) so konfiguriert ist, dass sie das Schmiermittel aus dem Tank (50) ausgibt, wenn sie dem Druck ausgesetzt ist.

5. Werkzeugmaschine (1) nach einem der vorstehenden Ansprüche, **dadurch gekennzeichnet, dass**
der operative Kopf (3) entlang mindestens einer Achse (Z), vorzugsweise einer vertikalen Achse (Z), beweglich ist, und dadurch, dass
der Schmierstoffspender (5) auf der genannten Achse (Z) angeordnet ist,
wobei die Steuereinheit so konfiguriert ist, dass sie den Arbeitskopf (3) zumindest entlang der Achse (Z) bewegt.

6. Werkzeugmaschine (1) nach einem der vorhergehenden Ansprüche, **dadurch gekennzeichnet, dass** der Schmierstoffspender (5) in Bezug auf die Werkzeugmaschine (1) abnehmbar ist.

7. Werkzeugmaschine (1) nach einem der vorhergehenden Ansprüche, **dadurch gekennzeichnet, dass** der Schmiermittelspender (5) mit der Arbeitsfläche (2) verbindbar ist.

8. Werkzeugmaschine (1) nach einem der vorhergehenden Ansprüche, **dadurch gekennzeichnet, dass** der Schmiermittelspender (5) zwischen einer Ruhekonfiguration, in der der Schmiermittelspender (5) vollständig unterhalb der Arbeitsfläche (2) angeordnet ist, und einer Betriebskonfiguration, in der der Schmiermittelspender (5) zumindest teilweise über die Arbeitsfläche (2) hinausragt, bewegbar ist.

9. Werkzeugmaschine (1) nach einem der vorhergehenden Ansprüche, **dadurch gekennzeichnet, dass** sie mindestens ein Paar von Stützelementen (11) umfasst, die die Arbeitsfläche (2) definieren und voneinander entfernt angeordnet sind, wobei der Schmiermittelspender (5) zwischen den Stützelementen (11) angeordnet ist.

10. Werkzeugmaschine (1) nach einem der vorstehenden Ansprüche, **dadurch gekennzeichnet, dass**
dass der Arbeitskopf (3) eine Vielzahl von Spindeln (30) umfasst, dass eine Schmierleitung (31) vorgesehen ist, die jeder Spindel (30) zugeordnet ist, und
dass eine Vielzahl von Öffnungen (32), vorzugsweise eine Öffnung (32) für jede Schmierleitung (31), vorgesehen ist.

11. Werkzeugmaschine (1) nach dem vorhergehenden Anspruch, **dadurch gekennzeichnet, dass** der Schmiermittelspender (5) gleichzeitig mit einer Vielzahl der Öffnungen (32), insbesondere mit allen Öffnungen (32), verbunden werden kann.

12. Verfahren zum automatischen Schmieren einer Spindel (30) einer Werkzeugmaschine (1) nach einem der vorhergehenden Ansprüche, **dadurch gekennzeichnet, dass** sie die folgenden Schritte umfasst: die folgenden
Schritte, die von der Steuereinheit ausgeführt werden können:
A. Bewegen des Arbeitskopfes (3) und/oder des Schmiermittelspenders (5), um den Schmiermittelspender (5) mit der mindestens einen Öffnung (32) für eine Spindelschmierung zu verbinden; und
B. Aktivieren des Schmiermittelspenders (5), um das Schmiermittel automatisch in die mindestens eine Schmiermittelleitung (31) durch die mindestens eine Öffnung (32) zuzuführen und folglich die Lager und/oder Zahnräder der mindestens einen Spindel (30) zu schmieren.

13. Verfahren nach dem vorhergehenden Anspruch, wobei der Schritt B. mittels eines elektrischen Befehls und/oder eines pneumatischen Befehls und/oder durch Ausüben eines Drucks ausgeführt wird.

14. Verfahren nach einem der Ansprüche 12-13, wobei der Arbeitskopf (3) eine Vielzahl von Spindeln (30), eine Vielzahl von Schmierleitungen (31), die in Fluidverbindung mit der Vielzahl von Spindeln (30) stehen, und eine Vielzahl von Öffnungen (32) umfasst, in denen die Vielzahl von Schmierleitungen (31) endet;
und wobei die Schritte A. und B. für jede Öffnung der Vielzahl von Öffnungen (32) wiederholt werden.

15. Verfahren nach einem der Ansprüche 12-13, wobei der Arbeitskopf (3) eine Vielzahl von Spindeln (30), eine Vielzahl von Schmierleitungen (31), die in Fluidverbindung mit der Vielzahl von Spindeln (30) stehen, und eine Vielzahl von Öffnungen (32) umfasst, in denen die Vielzahl von Schmierleitungen (31) endet;
und wobei der Schritt A. das gleichzeitige Verbinden des Schmiermittelspenders (5) mit einer Vielzahl der Öffnungen (32), insbesondere mit allen Öffnungen (32), umfasst.

## Revendications

1. Machine-outil (1), en particulier pour l'usinage d'éléments à usiner (P) tels que des panneaux de bois et similaires, comprenant:
une surface de travail (2), destinée à recevoir un élément à usiner (P);
au moins une tête opérationnelle (3), mobile par rapport à l'élément à usiner (P), et comprenant
au moins une broche (30), pouvant être couplée, en cours d'utilisation, à un organe d'usinage respectif (4), pour l'usinage dudit élément à usiner (P), dans lequel des roulements et/ou des engrenages pour la transmission du mouvement font partie de ladite au moins une broche (30), et
au moins un conduit de lubrification (31) en connexion fluide avec au moins une ouverture (32), pour introduire un lubrifiant, et avec ladite au moins une broche (30) pour une lubrification de la broche;
un distributeur de lubrifiant (5), pouvant être couplé à ladite au moins une ouverture (32), ledit distributeur de lubrifiant (5) étant configuré pour distribuer, lorsqu'il est activé, ledit lubrifiant;
**caractérisé en ce que** la machine-outil comprend en outre:
une unité de commande, pour contrôler le mouvement de ladite tête opérationnelle (3) et/ou dudit distributeur de lubrifiant (5),
dans lequel ladite unité de commande est configurée pour commander au moins un mouvement mutuel entre ladite tête opérationnelle (3) et ledit distributeur de lubrifiant (5), pour coupler ledit distributeur de lubrifiant (5) à ladite au moins une ouverture (32), et pour activer ledit distributeur de lubrifiant (5) de sorte que ledit distributeur de lubrifiant (5) fournisse ledit lubrifiant dans ledit au moins un conduit de lubrification (31) à travers ladite au moins une ouverture (32), pour lubrifier lesdits roulements et/ou engrenages de ladite au moins une broche (30).

2. Machine-outil (1) selon la revendication 1, **caractérisée par le fait que** ledit distributeur de lubrifiant (5) est configuré pour être activé au moyen d'une commande électrique, et/ou d'une commande pneumatique, et/ou par l'exercice d'une pression.

3. Machine-outil (1) selon l'une quelconque des revendications précédentes, **caractérisée en ce que** ledit distributeur de lubrifiant (5) est configuré pour être activé par l'exercice d'une pression, et **en ce que** ladite unité de commande est configurée pour commander ledit au moins un mouvement mutuel entre ladite tête opérationnelle (3) et ledit distributeur de lubrifiant (5) de sorte que ladite tête opérationnelle (3) exerce ladite pression sur le distributeur de lubrifiant (5).

4. Machine-outil (1) selon l'une quelconque des revendications 2 ou 3, **caractérisée en ce que** ledit distributeur de lubrifiant (5) comprend un réservoir (50) pour contenir ledit lubrifiant et une pompe de distribution (51) en liaison fluidique avec ledit réservoir (50); ladite pompe de distribution (51) étant configurée pour distribuer ledit lubrifiant à partir dudit réservoir (50) lorsqu'elle est soumise à ladite pression.

5. Machine-outil (1) selon l'une quelconque des revendications précédentes, **caractérisée en ce que**
ladite tête opérationnelle (3) est mobile le long d'au moins un axe (Z), de préférence un axe vertical (Z), et **en ce que**
ledit distributeur de lubrifiant (5) est placé sur ledit axe (Z),
dans lequel ladite unité de commande est configurée pour déplacer ladite tête opérationnelle (3) au moins le long dudit axe (Z).

6. Machine-outil (1) selon l'une quelconque des revendications précédentes, **caractérisée en ce que** ledit distributeur de lubrifiant (5) est amovible par rapport à ladite machine-outil (1).

7. Machine-outil (1) selon l'une quelconque des revendications précédentes, **caractérisée par le fait que** le distributeur de lubrifiant (5) peut être relié à la surface de travail (2).

8. Machine-outil (1) selon l'une quelconque des revendications précédentes, **caractérisée en ce que** ledit distributeur de lubrifiant (5) est mobile entre une configuration de repos, où ledit distributeur de lubrifiant (5) est complètement placé sous ladite surface de travail (2), et une configuration opérationnelle, où ledit distributeur de lubrifiant (5) fait saillie au moins partiellement au-dessus de ladite surface de travail (2).

9. Machine-outil (1) selon l'une quelconque des revendications précédentes, **caractérisée en ce qu'**elle comprend au moins une paire d'éléments de support (11), définissant ladite surface de travail (2) et placés à l'écart l'un de l'autre, dans laquelle ledit distributeur de lubrifiant (5) est placé entre lesdits éléments de support (11).

10. Machine-outil (1) selon l'une quelconque des revendications précédentes, **caractérisée**
**en ce que** ladite tête opérationnelle (3) comprend une pluralité de broches (30), en ce qu'un conduit de lubrification (31) est prévu, qui est associé à chaque broche (30), et
en ce sens qu'une pluralité d'ouvertures (32), de préférence une ouverture respective (32) pour chaque conduit de lubrification (31), est prévue.

11. Machine-outil (1) selon la revendication précédente, **caractérisée en ce que** ledit distributeur de lubrifiant (5) peut être couplé simultanément à une pluralité de ces ouvertures (32), en particulier à toutes ces ouvertures (32).

12. Procédé de lubrification automatique d'une broche (30) d'une machine-outil (1) selon l'une quelconque des revendications précédentes, **caractérisé en ce qu'**il comprend: les étapes suivantes qui sont exécutables par ladite unité de commande:
A. déplacer ladite tête opérationnelle (3) et/ou ledit distributeur de lubrifiant (5) de manière à coupler ledit distributeur de lubrifiant (5) avec ladite au moins une ouverture (32) pour une lubrification de la broche; et
B. activer ledit distributeur de lubrifiant (5) pour fournir automatiquement ledit lubrifiant dans ledit au moins un conduit de lubrification (31) à travers ladite au moins une ouverture (32) et, par conséquent, lubrifier lesdits roulements et/ou engrenages de ladite au moins une broche (30).

13. Procédé selon la revendication précédente, dans lequel ladite étape B. est exécutée au moyen d'une commande électrique, et/ou d'une commande pneumatique, et/ou par l'exercice d'une pression.

14. Procédé selon l'une quelconque des revendications 12-13, dans lequel ladite tête opérationnelle (3) comprend une pluralité de broches (30), une pluralité de conduits de lubrification (31) en communication fluide avec ladite pluralité de broches (30), et une pluralité d'ouvertures (32) dans lesquelles se termine ladite pluralité de conduits de lubrification (31); et dans lequel lesdites étapes A. et B. sont répétées pour chaque ouverture de ladite pluralité d'ouvertures (32).

15. Procédé selon l'une quelconque des revendications 12-13 dans lequel ladite tête opérationnelle (3) comprend une pluralité de broches (30), une pluralité de conduits de lubrification (31) en communication fluide avec ladite pluralité de broches (30), et une pluralité d'ouvertures (32) dans lesquelles se termine ladite pluralité de conduits de lubrification (31); et dans lequel ladite étape A. comprend le couplage simultané dudit distributeur de lubrifiant (5) avec une pluralité de ces ouvertures (32), en particulier avec toutes ces ouvertures (32).
